# EUROPEAN PATENT APPLICATION

(11) **EP 1 847 625 A1**
(43) Date of publication of application: **24.10.2007**
(21) Application number: 05709840.2
(22) Date of filing: 07.02.2005
(51) Int. Cl.: C22B 1/244, C22B 1/248, B09B 3/00, C21B 13/12

(54) **BULKY PRODUCT AND METHOD FOR PRODUCING BULKY PRODUCT**

(71) Applicant: Hoei Shokai Co. Ltd., Toyota-shi Aichi 4730932 (JP)
(72) Inventor: MISHIMA, Yasuo c/o HOEI SHOKAI CO., LTD., Toyota-shi, Aichi 4730932 (JP)
(74) Representative: Waldren, Robin Michael
(86) International application number: PCT/JP2005/001788
(87) International publication number: WO 2006/082658

(57) **Abstract**

[Object] To provide a lump object which is easily handled and for which a magnetic material of various forms can be used, and a method of producing the lump object.

[Solving means] A briquette 32 has a structure in which an outer circumference of a cylindrical member 41, in which an iron powder 34 is mixed into waste plastic 33, is surrounded by an outer covering member 42 obtained by melting the waste plastic 33 and then solidifying it. As a result, it is possible to provide a lump object which is easily handled and for which a magnetic material of various forms can be used, and a method of producing the lump object.

## Description

### Technical Field

The present invention relates to a lump object used as a raw material and an energy source for an electric furnace, for example, and to a method of producing the lump object.

### Related Art

There has been made an attempt to use waste plastic as a heat source for a melting furnace such as an electric furnace. However, it is very inconvenient to handle waste plastic when transported to for example a steel plant because waste plastic has a low bulk specific gravity. Further, in a steel plant or the like, a lifting magnet is generally used as means for transporting scrap metal to a melting furnace, but a lifting magnet cannot be used for handling waste plastic. In this respect, there is also a problem.

Patent Document 1 discloses a technique in which waste plastic is subjected to compression molding by using a press, a resultant object is surrounded by a magnetic metal material such as a waste drum, and a surrounded object is compressed to be integrated with the magnetic metal material. This technique solves the above-mentioned problem inherent in the handling of waste plastic.
Patent Document 1: Japanese Patent Application Laid-open No. 2001-355025 (see paragraph 0006 and Fig. 1)

### Disclosure of Invention

### Subject that Invention is to solve

However, in the technique disclosed in Patent Document 1, there is still a problem in that the magnetic metal material is limited to a waste drum or the like, so iron powders of for example metal shavings cannot be used as the magnetic metal material as they are.

In addition, in the process of compression molding, it is difficult to perform continuous processing or unmanned operation. In this respect, the technique of involving the compression molding process using a press, which is disclosed in Patent Document 1, has a further problem. In particular, in a field of recycling of this type, a break-even point is very high. Therefore, continuous processing or unmanned operation is highly demanded.

The present invention has been made in view of the above-mentioned circumstances, and has an object to provide a lump object which can be easily handled and use magnetic materials of various forms, and a method of producing a lump object.

It is another object of the present invention to provide a lump object which allows continuous processing or unmanned operation, and a method of producing the lump object.

### Means for solving problem

The present invention originally has an object to effectively use wastes of plastic, iron, or the like, but there are the problems mentioned above. In order to solve the problems, the present invention provides a lump object in which a magnetic material is mixed into waste plastic at a rate of about 50 wt% to 70 wt% (more preferably 55 wt% to 65 wt% and much more preferably 60 wt% (in this case, the waste plastic is 40 wt%, for example)) to be integrated with the waste plastic.

Examples of the magnetic material include iron, nickel, cobalt, or the like. As the magnetic material, it is preferable to use iron in a powder state or a granular state. Iron in a powder state or a granular state includes iron shavings generated at the time of machining, for example. Pure iron, reduced iron, atomized iron, or the like may of course be used as iron, although for example iron oxide is preferable.

The lump object obtained by mixing the iron powders into the waste plastic to integrate them with each other can be used as a raw material and an energy source for an electric furnace, for example. When the lump object is cast into the electric furnace, the waste plastic is used as the energy source because of its effect of combustion aid. Further, the waste plastic is used as a material for reducing iron oxide to pure iron. The mixed iron powders serves as a material itself of iron in the electric furnace. When mixed at a rate of 50 wt% or more, the iron powders can be handled using a lifting magnet, leading to significantly easy handling. When the iron powders are mixed at a rate of more than 70 wt%, the lump object exhibits less effect of combustion aid and less reducing effect.

Herein, various kinds of materials such as a dashboard of a car and a plastic bottle can be mixed as the waste plastic. For example, rigid plastic and flexible plastic may be mixed. As described above, rigid plastic and flexible plastic are allowed to be mixed, with the result that the waste plastic can be handled easily in the process of mixing the magnetic material and the waste plastic.

Specifically, in the process of mixing the magnetic material and the waste plastic, they are cast in for example a twin screw extruder. When only the flexible plastic is to be cast, it is very difficult to cast the flexible plastic to an input opening of the twin screw extruder, that is, workability is poor because the flexible plastic is bulky. In contrast, the rigid plastic and the flexible plastic are mixed, which makes the casting operation easy to perform, leading to improvement of the workability.

The lump object according to the present invention includes an area surrounded by an outer cover obtained by melting and solidifying the waste plastic. For example, the outer circumferential portion of a cylindrical lump object is preferably surrounded by the area. As a typical form, the lump object according to the present invention includes: a cylindrical member in which a magnetic material is mixed into waste plastic; and an outer covering member provided around the outer circumference of the cylindrical member and obtained by mixing a magnetic material into waste plastic and melting and solidifying the waste plastic.

In the case of mixing the magnetic material into the waste plastic to integrate them with each other, the whole waste plastic may be melted and used as a binder, but melting the waste plastic requires massive energy. On the other hand, when the waste plastic is not melt, even if the waste plastic is compressed once, it returns to its original state, i.e., to be bulky, which makes the handling of the waste plastic difficult. In contrast, in the present invention, the cylindrical member in which the magnetic material is mixed into the waste plastic is surrounded by the outer covering member. Therefore, plastic in the cylindrical member is not melt to maintain materiality. As a result, energy required for melting is kept small, and retuning to the bulky state is prevented.

The lump object according to the present invention can be formed by extrusion molding, which is performed in a state where an extrusion head is provided at the end of the twin screw extruder, for example. In this case, the extrusion head is heated by an electric heater to about 160°C to 200°C, and more preferably about 180°C, which makes it possible to continuously form the outer covering member around the surface of the lump object extruded from the head.

As described above, the lump object according to the present invention can be formed by extrusion molding, that is, eliminate a compression molding process using a press. Accordingly, the continuous processing or the unmanned operation can be realized.

It should be noted that if the temperature of the head is lower than 160°C, the lump object is not melt, while if the temperature exceeds 200°C, the whole lump object is melt. As a result, energy is wasted and the cylindrical shape may not be obtained at the time of extrusion. Specifically, a coil shape may be obtained. Thus, there is a fear of inconvenient handling.

In the lump object according to the present invention, aluminum powders may be mixed. When aluminum is mixed into the lump object, a thermite reaction, in which aluminum or the like reduces oxidized metal in the electric furnace, is caused. In the thermite reaction, a large amount of heat is generated. By using the large amount of heat, the support effect for combustion can be increased.

A method of producing a lump object according to the present invention includes the steps of: mixing a magnetic material into waste plastic by extrusion molding to integrate the magnetic material and the waste plastic with each other; and heating an extrusion head used for the extrusion molding at 160°C to 200°C.

It is preferable that the extrusion head be heated at about 180°C.

According to the producing method of the present invention, the compression molding by using a press or the like is not involved. Therefore, continuous processing or unmanned operation can be conducted.

A lump object produced according to the present invention includes: a cylindrical member in which a magnetic material is mixed into waste plastic; and an outer covering member provided around an outer circumference of the cylindrical member and obtained by mixing a magnetic material into waste plastic and melting and solidifying the waste plastic.

### Effect of present invention

According to the present invention, the lump object is easily handled, magnetic materials of various forms can be used, and the continuous processing or the unmanned operation can be performed.

### Best mode for carrying out invention

Hereinafter, embodiments of the present invention will be described with reference to the drawings.

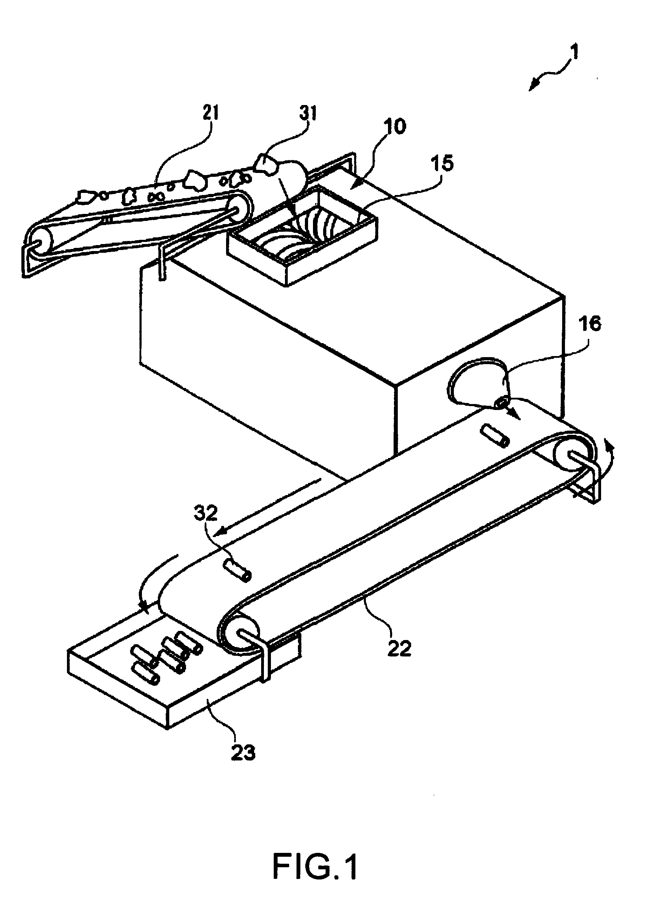

FIG. 1 is a view illustrating a structure of a system for performing extrusion molding to obtain a briquette as a lump object according to an embodiment of the present invention.

As shown in FIG. 1, a system 1 includes a twin screw extruder 10, a first belt conveyer 21, and a second belt conveyer 22. The first belt conveyer 21 conveys a raw material 31 which is cast into the twin screw extruder 10. The second belt conveyer 22 conveys a briquette 32 obtained by performing extrusion molding by the twin screw extruder 10. At the downstream side end of the second belt conveyer 22, a container 23 for holding the briquette 32 conveyed by the belt conveyer 22 is disposed.

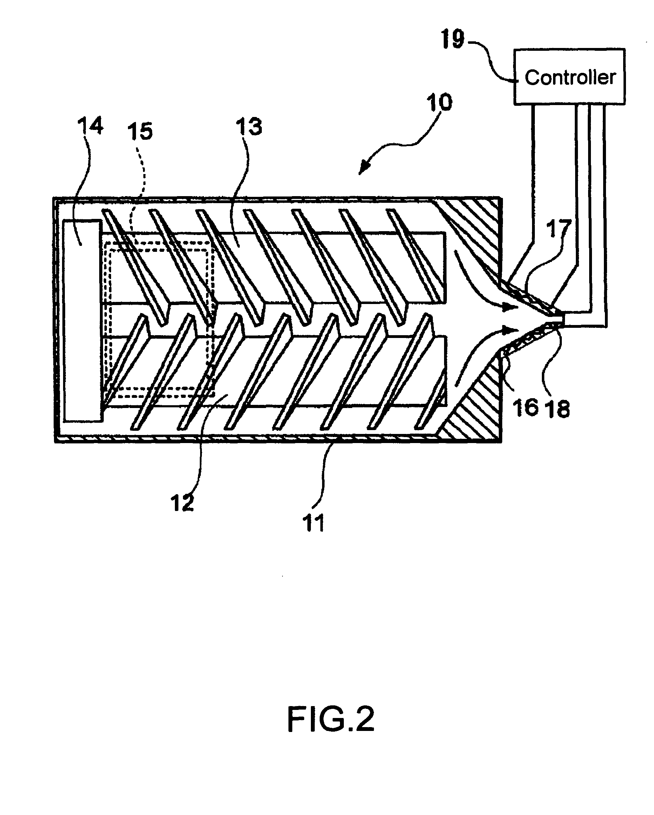

FIG. 2 is a view for showing a structure of the twin screw extruder 10 mentioned above.

As shown in FIG. 2, the twin screw extruder 10 has a structure in which a pair of pulverizing/kneading screws 12 and 13 is disposed in a casing 11. Those screws 12 and 13 are disposed close to each other in meshing engagement and driven to rotate in the same direction by a rotary drive section 14.

On an upper surface portion of the casing 11 on the upstream side of the screws 12 and 13, an input opening 15 into which the raw material 31 is cast is provided. Above the input opening 15, the downstream side end of the first belt conveyer 21 is disposed, so that the raw materials conveyed by the first belt conveyer 21 are successively cast into the twin screw extruder 10 through the input opening 15.

On the end surface of the casing 11 on the downstream side of the screws 12 and 13, an extrusion head 16 is provided. An object extruded from the extrusion head 16 breaks due to its self weight to drop downward, and thus the briquette 32 in a predetermined length is obtained. The briquette 32 is put on the second belt conveyer 22 disposed under the extrusion head 16 and conveyed to the container 23 to be held therein.

To the extrusion head 16, an electric heater 17 and a thermocouple 18 are provided. The electric heater 17 heats the extrusion head 16. The thermocouple 18 measures the temperature of the extrusion head 16. A controller 19 controls power supplied to the electric heater 17 while measuring the temperature of the extrusion head 16 by means of the thermocouple 18 so that the extrusion head 16 becomes a desirable temperature.

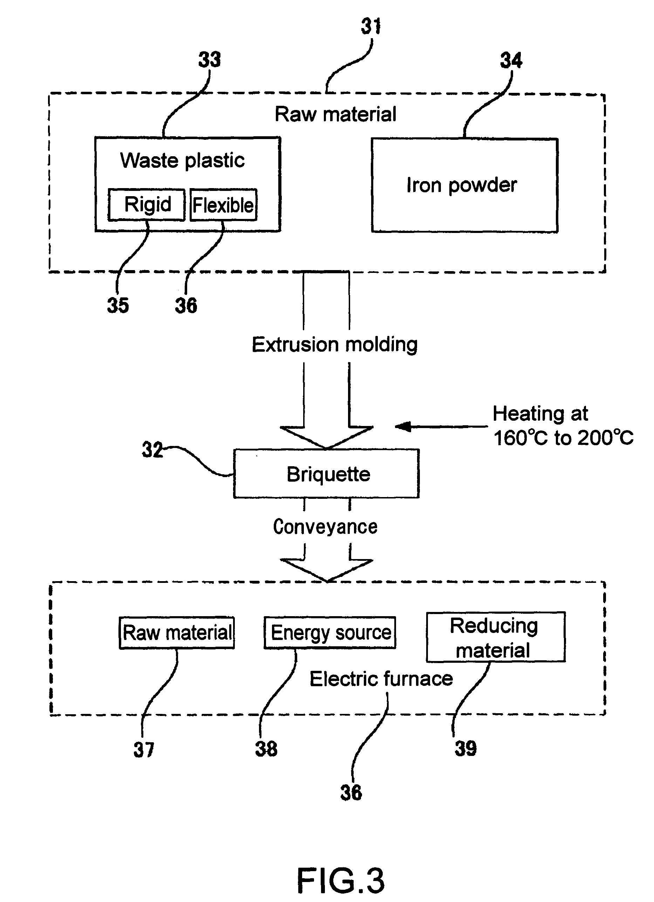

As shown in FIG. 3, the raw material 31 cast into the twin screw extruder 10 is a mixture of a waste plastic 33 and an iron powder 34. The waste plastic 33 includes a rigid waste plastic 35 such as a dashboard of a car and a flexible waste plastic 36 such as a plastic bottle. The rigid plastic includes a general thermosetting resin, a styrol resin, an acrylic resin, polypropylene, or the like. Meanwhile, the flexible plastic includes polyethylene, polystyrene, or the like.

By mixing the rigid waste plastic 35 and the flexible waste plastic 36, the waste plastic can be very easily cast into the twin screw extruder 10. In other words, if only the flexible waste plastic is to be cast, the flexible waste plastic may fall off when conveyed by the first belt conveyer 21 and may be very poorly caught by the screws in the twin screw extruder 10.

Further, the iron powder 34 is mixed into the waste plastic 33 at a rate of for example 50 wt% to 70 wt%, more preferably 55 wt% to 65 wt%, and much more preferably about 60 wt%.

The briquette 32 obtained by mixing the iron powder 34 into the waste plastic 33 to integrate them with each other can be used as a raw material 37 and an energy source 38 in an electric furnace 36, for example. In other words, by casting the briquette 32 into the electric furnace 36, the waste plastic 33 is used as the energy source 38 because of its effect of combustion aid. In addition, the waste plastic 33 is used as a reducing material 39 for reducing iron oxide to pure iron. Further, the mixed iron powder 34 serves as a material of iron in the electric furnace 36.

In the briquette 32, the iron powder 34 is mixed at a rate of 50 wt% or more, so the handling can be performed using the lifting magnet, which makes the handling very easy. Specifically, in a steel plant or the like, the lifting magnet is generally used as means for conveying scrap metal to the electric furnace. In the same way, the briquette 32 according to this embodiment can be conveyed to the electric furnace 36 using the lifting magnet. For example, in the system 1 of this embodiment, when the briquette 32 is held in the container 23, the container 23 is transported to a steel plant by a truck or the like. In the steel plant, the container 23 is transported close to the electric furnace, and the briquette 32 in the container 23 is directly cast into the electric furnace using the lifting magnet.

In the twin screw extruder 10 according to the present invention, it is very important to control the temperature of the extrusion head 16. Specifically, the point is that extrusion head 16 is heated to for example about 160°C to 200°C, and more preferably about 180°C, using the electric heater 17.

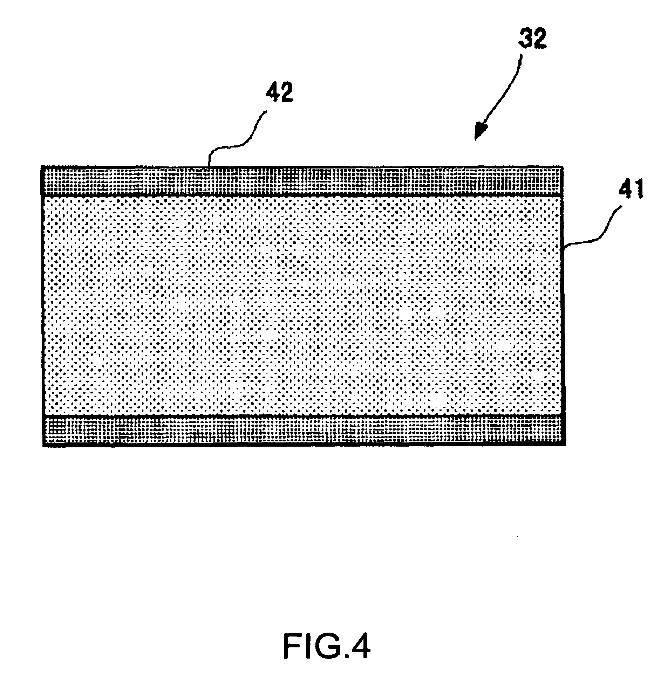

FIG. 4 is a sectional view of the briquette 32 obtained by performing extrusion molding from the extrusion head 16 which is controlled to have the above-mentioned temperatures.

As shown in FIG. 4, the briquette 32 has a structure in which the outer circumference of a cylindrical member 41 in which the iron powder 34 is mixed into the waste plastic 33 is surrounded by an outer covering member 42 obtained by melting the waste plastic 33 by the extrusion head 16 and solidifying the waste plastic in the air.

In the briquette 32 having the above-mentioned structure, the cylindrical member 41 in which the iron powder 34 is mixed into the waste plastic 33 is surrounded by the outer covering member 42. Therefore, plastic in the cylindrical member 41, that is, the whole briquette 32 is prevented from melting, which makes it possible to maintain materiality. Thus, the briquette 32 requires less energy for melting and does not return to the bulky state.

As described above, in the system 1 according to this embodiment, the briquette 32 can be directly formed by extrusion molding, that is, does not involve the compression molding process using a press. As a result, the continuous processing or the unmanned operation for the process can be performed.

Next, another embodiment of the present invention will be described.

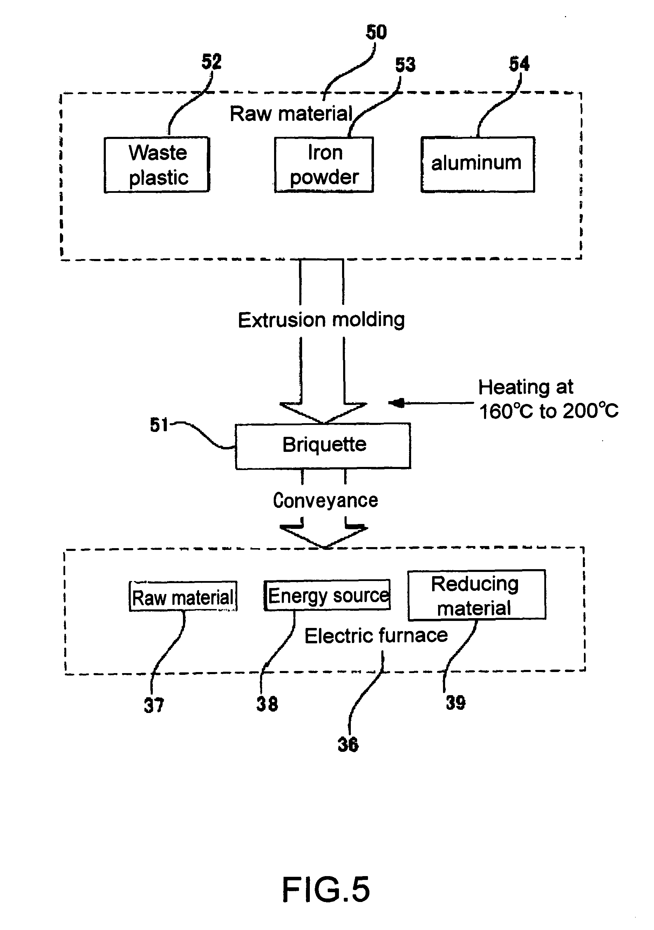

In this embodiment, as shown in FIG. 5, a raw material in which a waste plastic 52, an iron powder 53, and aluminum 54 are mixed is cast into the twin screw extruder 10 in the system 1 of the above embodiment. Therefore, a briquette 51 is obtained by mixing the iron powder 53 and the iron powder 54 into the waste plastic 52 to integrate them with each other. It is preferable to use aluminum in a powder state or a granular state.

In this embodiment, by mixing the aluminum 54 into the briquette 51, a thermite reaction (Fe₂O₃ + 2A1 → 2Fe + Al₂O₃), in which aluminum reduces oxidized metal in the electric furnace, is caused, for example. The thermite reaction generates a large amount of heat, so the effect of combustion aid can be increased by the use of the large amount of heat.

It should be noted that the present invention is not limited to the embodiments described above.

Into the briquette according to the above embodiments, at least one assistant selected from the group consisting of lime, aluminum dross, coal, coke, and fluorite may be mixed to integrate them with each other.

The lime includes a calcium oxide, a calcium hydroxide, and limestone. Those are generally used as powder and granular materials. The lime serves as a dephosphorizing and desulfurizing agent. The aluminum dross, the coal, and the coke serve as deoxidizers. The fluorite serves as a solvent for fluidizing slag. They function as assistants for steel manufacturing.

Accordingly, for example, in the case of casting scrap metal into the electric furnace and successively performing an initial charge, melting, an additional charge, melting, and tapping in this order to manufacture steel, when the briquette mentioned above is cast into the electric furnace at the time of the initial charge of the scrap metal and/or the additional charge thereof, the briquette burns gradually from its outer portion and thus does not burn explosively. At this time, the waste plastic serves as a heat source or a carbon source, and the assistants serve as refining agents.

As a result, it is possible to simultaneously realize both the effective use of the waste plastic and the cost reduction of the heat source or the carbon source in the melting and refining of the metal material, the heat source and the carbon source being safe and not interfering the operation of the furnace or related equipment.

There is no particular limit to a mixing ratio of the briquette and the assistant. In order to prevent the operation of the furnace or related equipment from being interfered and to obtain further safety, it is preferable to mix the assistant at a rate of 10 wt% to 50 wt%.

Further, the lime and water are mixed into the briquette according to the above embodiments, and the obtained mixture is solidified and integrated.

Also, in this case, it is possible to simultaneously realize both the effective use of the waste plastic and the cost reduction of the heat source or the carbon source in the melting and the refining of the metal material, the heat source and the carbon source being safe and not interfering the operation of the furnace or related equipment.

Further, in the above embodiments, the twin screw extruder is cited as an example of extruders, but an extruder of another type may of course be employed.

### Brief Description of Drawings

[Fig. 1] A perspective view illustrating a structure of a system for performing extrusion molding to obtain a briquette as a lump object according to an embodiment of the present invention.
[Fig. 2] A sectional view illustrating a structure of a twin screw extruder shown in Fig. 1.
[Fig. 3] A diagram showing a relation among a raw material of a briquette, the briquette, and availability thereof according to the embodiment of the present invention.
[Fig. 4] A sectional view of the briquette according to the embodiment.
[Fig. 5] A diagram showing a relation among a raw material of a briquette, the briquette, and availability thereof according to another embodiment of the present invention.

### Description of reference numerals

- 1: system
- 10: twin screw extruder
- 16: extrusion head
- 17: electric heater
- 32: briquette
- 33: waste plastic
- 34: iron powder
- 35: rigid waste plastic
- 36: flexible waste plastic
- 41: cylindrical member
- 42: outer covering member

## Claims

1. A lump object comprising: a magnetic material; and a waste plastic, wherein the magnetic material is mixed into the waste plastic at a rate of 50 wt% to 70 wt% to be integrated with the waste plastic.

2. The lump object according to claim 1, wherein the magnetic material comprises iron in a powder state or a granular state.

3. The lump object according to claim 1 or 2, wherein the waste plastic is mixed with a rigid plastic and a flexible plastic.

4. The lump object according to any one of claims 1 to 3, wherein the lump object includes an area surrounded by an outer cover obtained by melting and solidifying the waste plastic.

5. The lump object according to any one of claims 1 to 4, wherein the lump object is mixed with aluminum.

6. A lump object, wherein:
a magnetic material is mixed into waste plastic to be integrated with the waste plastic; and
the lump object includes an area surrounded by an outer cover obtained by melting and solidifying the waste plastic.

7. A lump object, comprising:
a cylindrical member in which a magnetic material is mixed into a waste plastic; and
an outer covering member provided around an outer circumference of the cylindrical member and obtained by mixing a magnetic material into the waste plastic and melting and solidifying the waste plastic.

8. A lump object comprising: a magnetic material; a aluminum; and a waste plastic, wherein the magnetic material and the aluminum are mixed into the waste plastic to be integrated with the waste plastic.

9. A method of producing an iron, wherein the lump object according to any one of claims 1 to 8 is cast into a melting furnace to produce the iron.

10. A method of producing a lump object, comprising the steps of:
mixing a magnetic material into a waste plastic by extrusion molding to integrate the magnetic material and the waste plastic with each other; and
heating an extrusion head used for the extrusion molding at 160°C to 200°C.

11. A lump object produced by the method according to claim 10.
